# EUROPÄISCHE PATENTANMELDUNG

(11) **EP 1 890 077 A1**
(43) Veröffentlichungstag der Anmeldung: **20.02.2008**
(21) Anmeldenummer: 06118953.6
(22) Anmeldetag: 15.08.2006
(51) Int. Cl.: F21S 8/12, F21Y 101/02

(54) **Lichtleiter für Fahrzeugleuchten**

(71) Anmelder: Hella KGaA Hueck & Co., 59552 Lippstadt (DE)
(72) Erfinder: Haase, Christian, 59755 Arnsberg (DE); Gröne, Stefan, 33034 Brakel-Hembsen (DE)

(57) **Zusammenfassung**

Die Erfindung betrifft einen Lichtleiter (10) für Fahrzeugleuchten, mit einem stabförmigen Lichtleiter (10), einer Lichteinkoppelstelle (12), der zumindest eine Lichtquelle zugeordnet ist, einer sich in Längsrichtung des Lichtleiters (10) erstreckenden Lichtauskoppelfläche (14), zumindest einer der Lichtauskoppelfläche (14) in Längsrichtung zugeordneten Lichtumlenkfläche (16), wobei sich der Abstand zwischen der Lichtauskoppelfläche (14) und der Lichtumlenkfläche (16) in Längsrichtung von der Lichteinkoppelstelle (12) her verringert.

Aufgabe der vorliegenden Erfindung ist es, einen derartigen Lichtleiter (10) für Fahrzeugleuchten derart weiterzubilden, das er sowohl eine gleichmäßige Ausleuchtung gewährleistet als auch ein optisch ansprechendes Design aufweist.

Diese Aufgabe wird dadurch gelöst, dass der Lichtleiter (10) in Längsrichtung die Lichtauskoppelfläche (14) und die Lichtumlenkfläche (16) miteinander verbindende Seitenflächen (18) aufweist, deren Querschnittsabmessung in Längsrichtung nahezu unverändert ist.

## Beschreibung

Die Erfindung betrifft einen Lichtleiter für Fahrzeugleuchten, mit einem stabförmigen Lichtleiter, einer Lichteinkoppelstelle, der zumindest eine Lichtquelle zugeordnet ist, einer sich in Längsrichtung des Lichtleiters erstreckenden Lichtauskoppelfläche, zumindest einer der Lichtauskoppelfläche in Längsrichtung zugeordneten Lichtumlenkfläche, wobei sich der Abstand zwischen der Lichtauskoppelfläche und der Lichtumlenkfläche in Längsrichtung von der Lichteinkoppelstelle her verringert.

Aus der DE 297 16 013 U1 ist ein derartiger Lichtleiter für Fahrzeugleuchten bekannt. Um eine gleichmäßige Ausleuchtung über die gesamte Länge des Lichtleiters zu erzielen, verringert sich in Längsrichtung von der Lichteinkoppelstelle her der Abstand zwischen der Lichtauskoppelfläche und der Lichtumlenkfläche.
Bei modernen Fahrzeugen mit Klarglasoptik sowohl bei Heckleuchten als auch bei Scheinwerfern werden immer häufiger Lichtleiter eingesetzt. Diese werden aus stilistischen Gründen häufig freiliegend in der Heckleuchte oder der Scheinwerfer positioniert. Hierbei ist jedoch nicht nur eine gleichmäßige Ausleuchtung erforderlich, sondern es wird auch ein optisch ansprechendes Design der Lichtleiter gewünscht. Bei einem aus der DE 297 16 013 U1 bekannten Lichtleiter mit optimierter Ausleuchtung besteht bei einer freiliegenden Anordnung in dem Beleuchtungselement das Problem, dass er aufgrund der beschriebenen Querschnittsverringerung kein optisch ansprechendes Design aufweist.

Aufgabe der vorliegenden Erfindung ist es, einen Lichtleiter für Fahrzeugleuchten gemäß dem Oberbegriff des Anspruchs 1 derart weiterzubilden, das er sowohl eine gleichmäßige Ausleuchtung gewährleistet als auch ein optisch ansprechendes Design aufweist.

Diese Aufgabe wird bei einem Lichtleiter für Fahrzeugleuchten, mit einem stabförmigen Lichtleiter, einer Lichteinkoppelstelle, der zumindest eine Lichtquelle zugeordnet ist, einer sich in Längsrichtung des Lichtleiters erstreckenden Lichtauskoppelfläche, zumindest einer der Lichtauskoppelfläche in Längsrichtung zugeordneten Lichtumlenkfläche, wobei sich der Abstand zwischen der Lichtauskoppelfläche und der Lichtumlenkfläche in Längsrichtung von der Lichteinkoppelstelle her verringert, dadurch gelöst, dass der Lichtleiter in Längsrichtung die Lichtauskoppelfläche und die Lichtumlenkfläche miteinander verbindende Seitenflächen aufweist, deren Querschnittsabmessung in Längsrichtung nahezu unverändert ist.
Dadurch dass sich der Abstand zwischen der Lichtauskoppelfläche und der Lichtumlenkfläche in Längsrichtung von der Lichteinkoppelstelle her verringert wird eine gleichmäßige Ausleuchtung über die Länge des Lichtleiters gewährleistet. Gleichzeitig sorgen die die Lichtauskoppelfläche und die Lichtumlenkfläche verbindenden Seitenflächen dadurch, dass ihre Querschnittsabmessung in Längsrichtung nahezu unverändert ist, dafür dass der beim Einblick von Außen in den Fahrzeugscheinwerfer oder die Fahrzeugleuchte der Lichtleiter gleichmäßig ausgebildetes Bauteil erscheint, welches ein optisch ansprechendes Design aufweist.

Eine vorteilhafte Ausführungsform der Erfindung zeichnet sich dadurch aus, dass die Seitenflächen die Lichtumlenkfläche stegartig einfassen, wobei sich der Einschnitt der Lichtumlenkfläche in den Querschnitt des Lichtleiters äquivalent zur Verringerung des Abstandes zwischen Lichtauskoppelfläche und Lichtumlenkfläche vergrößert. Somit erscheint der Lichtleiter beim Einblick von Außen in den Fahrzeugscheinwerfer oder die Fahrzeugleuchte eine konstante Dicke zu haben.

Um der modernen Form von Fahrzeugscheinwerfern oder Fahrzeugleuchten mit einer sehr starken Feilung und/oder Neigung der Beleuchtungselemente an der Fahrzeugfront oder dem Fahrzeugheck folgen zu können, weist der Lichtleiter in Längsrichtung eine bogenförmige Ausbildung auf.

Um den Lichtleiter einfach in dem Fahrzeugscheinwerfer oder der Fahrzeugleuchte festsetzen zu können, weist der Lichtleiter sowohl benachbart zur Lichteinkoppelfläche, als auch benachbart zu der der Lichteinkoppelfläche entgegengesetzt liegenden Endfläche Befestigungselemente auf, die vorzugsweise einstückig mit dem Lichtleiter ausgebildet sind. Ein derartiger Aufbau bieten den weiteren Vorteil, dass der Lichtleiter frei im Bauraum des Fahrzeugscheinwerfers oder der Fahrzeugleuchte angeordnet werden kann, wodurch ein optisch ansprechendes Design erreicht wird.

Bevorzugt ist der Lichtleiter in einem Fahrzeugscheinwerfer angeordnet und erzeugt Positionslicht.

Anhand der beigefügten Zeichnungen wird die Erfindung nachfolgend näher erläutert. Dabei zeigt:
- Fig. 1: Eine perspektivische Ansicht von Hinten auf einen erfindungsgemäßen Lichtleiter.
- Fig. 2: Eine Seitenansicht des in Figur 1 dargestellten Lichtleiters.
- Fig. 3: Eine an der Längsmittelachse geschnittene Seitenansicht des in Figur 2 dargestellten Lichtleiters.
- Fig.4: Eine geschnittene Querschnittsdarstellung des in Figur 2 dargestellten Lichtleiters im Bereich nahe der Lichteinkoppelfläche.
- Fig. 5: Eine geschnittene Querschnittsdarstellung des in Figur 2 dargestellten Lichtleiters im Bereich nahe des der Lichteinkoppelfläche entgegengesetzten Endes des Lichtleiters.

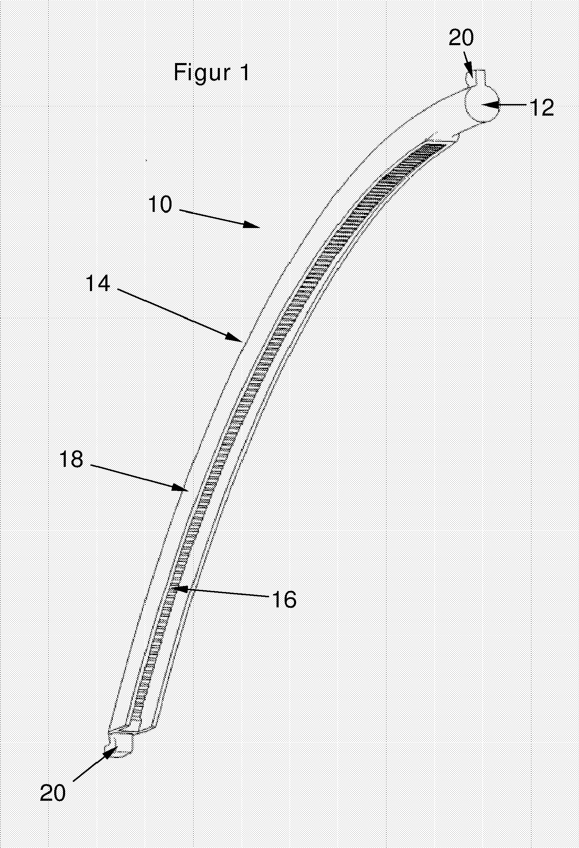

In Figur 1 ist in einer perspektivischen Ansicht von Hinten ein erfindungsgemäßer Lichtleiter (10) mit bogenförmiger Ausbildung dargestellt. Das Licht einer nicht dargestellten Lichtquelle, welche beispielsweise eine LED ist, wird über die Lichteinkoppelfläche (12) in den Lichtleiter (10) eingekoppelt. Das in dem Lichtleiter (10) geführte Licht trifft endlang der Längsausdehnung des Lichtleiters (10) auf die Lichtumlenkfläche (16), die als Umlenkelemente beispielsweise Prismen oder eine Bedruckung aufweist, wodurch das Licht in Richtung der Lichtauskoppelfläche (14) umgelenkt und an dieser aus dem Lichtleiter (10) zur Erzeugung der Signalfunktion ausgekoppelt wird. Um eine möglichst gleichmäßige Lichtauskopplung entlang der Längserstreckung des Lichtleiters (10) zu erzielen, verringert sich der Abstand zwischen der Lichtauskoppelfläche (14) und der Lichtumlenkfläche (16) in Längsrichtung des Lichtleiters (10) von der Lichteinkoppelstelle (12) her. Damit diese Querschnittsverringerung bei der Ansicht von Außen auf den Lichtleiter (10) nicht direkt zu sehen ist, und er somit ein optisch ansprechendes Design aufweist, bleibt die Querschnittsabmessung der die Lichtauskoppelfläche (14) und die Lichtumlenkfläche (16) miteinander verbindenden Seitenflächen (18) nahezu unverändert, so dass es optisch den Anschein macht, dass sich der Querschnitt des Lichtleiters (10) entlang seiner Längserstreckung nicht verändert. Benachbart zu der Lichteinkoppelfläche (12) und benachbart zu der der Lichteinkoppelfläche (12) entgegengesetzten Endfläche des Lichtleiters (10) sind einstückig Befestigungselemente (20) an den Lichtleiter (10) angeformt, mittels derer der Lichtleiter (10) einfach und schnell in einem Fahrzeugscheinwerfer oder einer Fahrzeugleuchte festsetzbar ist.

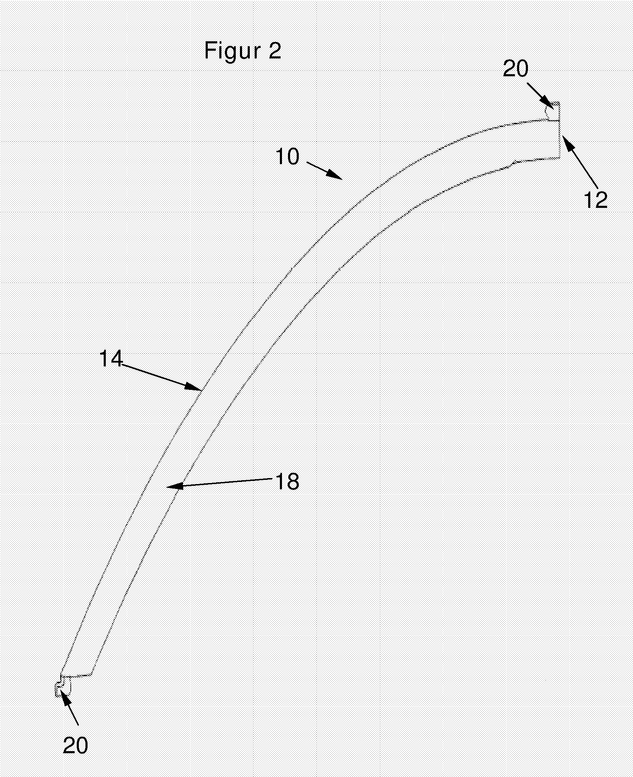

In Figur 2 ist der in Figur 1 gezeigte Lichtleiter (10) in einer Seitenansicht dargestellt. Aufgrund der in Längsrichtung des Lichtleiters (10) nahezu unveränderten Querschnittsabmessungen der Seitenfläche (18) erscheint der Lichtleiter (10) in einem optisch ansprechenden Design.

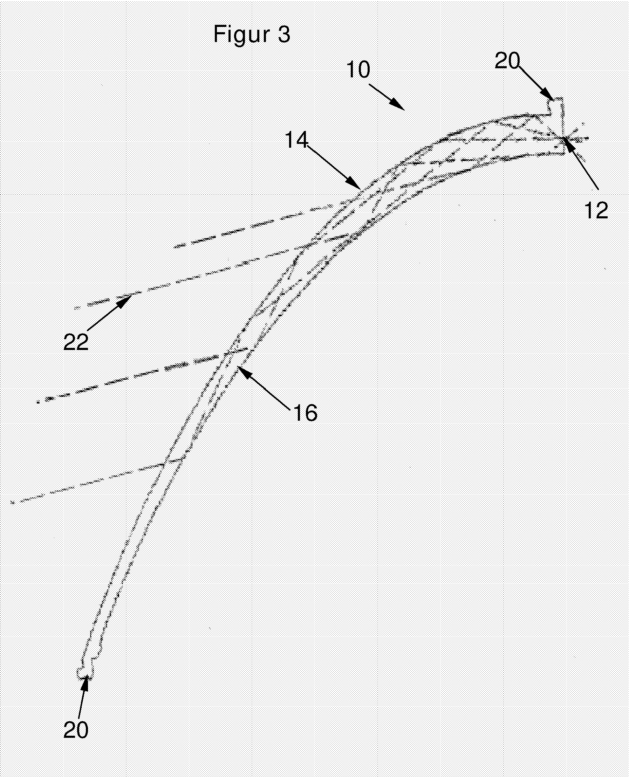

In Figur 3 wird eine an der Längsmittelachse geschnittene Seitenansicht des in Figur 2 dargestellten Lichtleiters (10) gezeigt. Die an der Lichteinkoppelfläche (12) eingekoppelten Lichtstrahlen (22) der nicht dargestellten Lichtquelle, unterliegen an den Grenzflächen des Lichtleiters (10) der Totalreflexion. Sobald die Lichtstrahlen (22) auf ein optisches Element der Lichtumlenkfläche (16) treffen, werden die für eine Totalreflexion erforderlichen Grenzwinkel beeinflusst, so dass keine weitere Totalreflexion erfolgt und die Lichtstrahlen (22) über die Lichtauskoppelfläche (14) aus dem Lichtleiter (10) austreten. Um eine gleichmäßige Lichtauskopplung an der Lichtauskoppelfläche (14) zu gewährleisten, verringert sich der Abstand zwischen der Lichtauskoppelfläche (14) und der Lichtumlenkfläche (16) in Längsrichtung des Lichtleiters (10) von der Lichteinkoppelstelle (12) her.

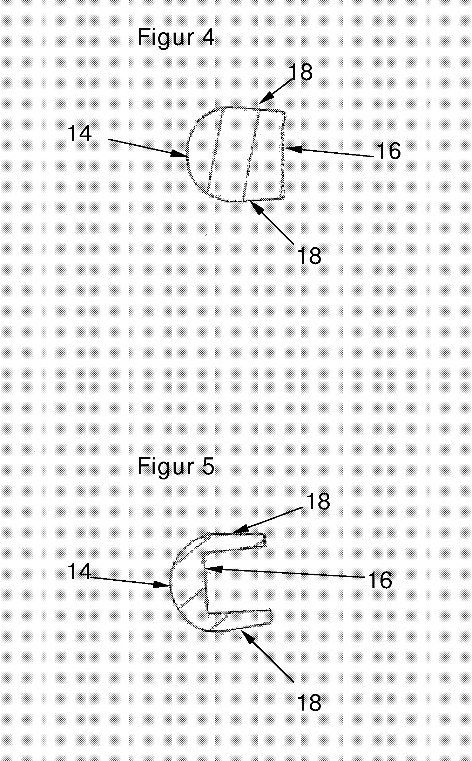

In den Figuren 4 und 5 wird jeweils ein Querschnitt des Lichtleiters (10) gezeigt, wobei die Figur 4 einem Querschnitt des Lichtleiters (10) nahe der Lichteinkoppelfläche (12) und die Figur 5 einem Querschnitt des Lichtleiters (10) nahe des der Lichteinkoppelfläche (12) entgegengesetzten Endes des Lichtleiters (10) entspricht. Wie anhand der Figuren 4 und 5 gut zu erkennen ist, erfolgt aufgrund der Abstandverringerung zwischen der Lichtauskoppelfläche (14) und der Lichtumlenkfläche (16) ein immer größerer Einschnitt in den Querschnitt des Lichtleiters (10), wobei die Querschnittsabmessungen der Seitenwände (18) unverändert bleiben.

### Bezugszeichenliste

- 10: Lichtleiter
- 12: Lichteinkoppelfläche
- 14: Lichtauskoppelfläche
- 16: Lichtumlenkfläche
- 18: Seitenfläche
- 20: Befestigungselement
- 22: Lichtstrahl

## Patentansprüche

1. Lichtleiter (10) für Fahrzeugleuchten, mit einem stabförmigen Lichtleiter (10), einer Lichteinkoppelstelle (12), der zumindest eine Lichtquelle zugeordnet ist, einer sich in Längsrichtung des Lichtleiters (10) erstreckenden Lichtauskoppelfläche (14), zumindest einer der Lichtauskoppelfläche (14) in Längsrichtung zugeordneten Lichtumlenkfläche (16), wobei sich der Abstand zwischen der Lichtauskoppelfläche (14) und der Lichtumlenkfläche (16) in Längsrichtung von der Lichteinkoppelstelle (12) her verringert, **dadurch gekennzeichnet, dass** der Lichtleiter (10) in Längsrichtung die Lichtauskoppelfläche (14) und die Lichtumlenkfläche (16) miteinander verbindende Seitenflächen (18) aufweist, deren Querschnittsabmessung in Längsrichtung nahezu unverändert ist.

2. Lichtleiter (10) für Fahrzeugleuchten nach Anspruch 1, **dadurch gekennzeichnet, dass** die Seitenflächen (18) die Lichtumlenkfläche (16) stegartig einfassen, wobei sich der Einschnitt der Lichtumlenkfläche (16) in den Querschnitt des Lichtleiters (10) äquivalent zur Verringerung des Abstandes zwischen Lichtauskoppelfläche (14) und Lichtumlenkfläche (16) vergrößert.

3. Lichtleiter (10) für Fahrzeugleuchten nach einem der vorstehenden Ansprüche, **dadurch gekennzeichnet, dass** der Lichtleiter (10) in Längsrichtung eine bogenförmige Ausbildung aufweist.

4. Lichtleiter (10) für Fahrzeugleuchten nach einem der vorstehenden Ansprüche, **dadurch gekennzeichnet, dass** der Lichtleiter (10) sowohl benachbart zur Lichteinkoppelfläche (12), als auch benachbart zu der der Lichteinkoppelfläche (12) entgegengesetzt liegenden Endfläche Befestigungselemente (20) aufweist.

5. Lichtleiter (10) für Fahrzeugleuchten nach Anspruch 4, **dadurch gekennzeichnet, dass** die Befestigungselemente (20) einstückig mit dem Lichtleiter (10) ausgebildet sind.

6. Lichtleiter (10) für Fahrzeugleuchten nach einem der vorstehenden Ansprüche, **dadurch gekennzeichnet, dass** er in einem Fahrzeugscheinwerfer angeordnet ist und Positionslicht erzeugt.
